(19) Europäisches Patentamt
European Patent Office
Office européen des brevets

(11) **EP 1 321 760 A1**

(12) **DEMANDE DE BREVET EUROPEEN**

(43) Date de publication:
**25.06.2003 Bulletin 2003/26**

(51) Int Cl.⁷: **G01N 21/64**, G02B 21/06

(21) Numéro de dépôt: **01870281.1**

(22) Date de dépôt: **18.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **UNIVERSITE LIBRE DE BRUXELLES B-1050 Bruxelles (BE)**

(72) Inventeurs:
• **Dubois, Frank**
  **1170 Bruxelles (BE)**
• **Yourassowsky, Catherine**
  **1170 Bruxelles (BE)**

(74) Mandataire: **Van Malderen, Joelle et al**
**Office Van Malderen,**
**Place Reine Fabiola 6/1**
**1083 Bruxelles (BE)**

(54) **Procédé de mesure de la fluorescence issue de microéchantillons et dispositif associé**

(57) La présente invention se rapporte à un procédé pour la mesure et la reconstruction en trois dimensions de la fluorescence issue d'échantillons, en particulier d'échantillons biologiques épais, par le couplage de signaux interférométriques obtenus par microscopie en holographie digitale et de signaux de fluorescence.

La présente invention se rapporte également au dispositif pour la mise en oeuvre dudit procédé, ainsi qu'au microscope fonctionnant en holographie digitale.

FIG. 3

## Description

### Objet de l'invention

La présente invention concerne un procédé et un dispositif de mesure en trois dimensions des signaux de fluorescence émis par des échantillons naturellement fluorescents ou préalablement marqués à l'aide d'un ou plusieurs fluorochromes.

Une application dudit dispositif et dudit procédé est la reconstruction en trois dimensions des signaux de fluorescence émis par des échantillons biologiques relativement épais en vue d'observer leur comportement dynamique et leur évolution dans le temps.

### Etat de la technique

La microscopie classique en fluorescence a apporté des progrès décisifs dans le domaine de la biologie. En particulier, la technique de l'immunofluorescence a permis de réaliser le marquage spécifique de molécules et leur localisation dans les tissus. Cette technique, associée à la découverte des GFP, les « green fluorescent proteins », a ainsi révolutionné l'étude de la localisation, de la dynamique et des interactions des protéines dans les cellules vivantes.

Toutefois, un des problèmes rencontrés en microscopie de fluorescence classique réside dans la fluorescence émise par les éléments situés hors du plan de netteté. Cette lumière parasite empêche une bonne lecture de l'image en ajoutant un bruit de fond important. Les images deviennent très difficiles à interpréter lorsque l'on observe des échantillons biologiques épais tels que des embryons.

La microscopie confocale permet quant à elle d'éviter ce problème en réalisant une excitation de la fluorescence de l'échantillon en une zone de très petite dimension qui balaye l'échantillon, et le blocage par une petite ouverture de la fluorescence émise hors de la zone illuminée.

Néanmoins, la microscopie confocale présente elle aussi ses propres inconvénients.

Un premier inconvénient de la microscopie confocale est que cette technique requiert le balayage complet de l'échantillon par un dispositif opto-mécanique. Cette opération requiert un temps relativement important pour analyser un volume (typiquement de l'ordre de quelques secondes) avant que l'image ne soit disponible pour la visualisation.

En outre, la source excitatrice utilisée en microscopie confocale est généralement un laser Argon ou Argon-Krypton qui peut endommager les échantillons biologiques.

Un autre inconvénient est que les sources excitatrices ne permettent pas de couvrir aisément toute la gamme de longueurs d'onde nécessaire à l'observation en fluorescence.

Enfin, la microscopie confocale est une technique extrêmement sophistiquée qui requiert une grande précision lors de la manipulation et qui est en outre onéreuse.

### Buts de l'invention

La présente invention vise à fournir un procédé et un dispositif de mesure de la fluorescence issue d'un échantillon, en particulier un échantillon biologique épais, à l'aide d'un microscope, qui ne présentent pas les inconvénients des techniques de microscopie classiques, y compris ceux de la microscopie confocale.

En particulier, la présente invention vise à fournir un procédé et un dispositif qui permettent d'obtenir des images en trois dimensions du champ de fluorescence et de suivre la répartition de la fluorescence sur l'ensemble du volume de l'échantillon ainsi que son évolution au cours du temps et cela, avec un décalage de temps minimal entre chaque prise d'image.

Un autre but de l'invention est de fournir un procédé et un dispositif qui ne nécessitent pas une manipulation trop complexe et dont le coût soit compétitif, notamment par rapport à la microscopie confocale.

### Résumé de l'invention

La présente invention se rapporte à un procédé pour la mesure et la reconstruction en trois dimensions de la fluorescence issue d'échantillons, en particulier d'échantillons biologiques épais, par le couplage de signaux interférométriques obtenus par holographie digitale et de signaux de fluorescence.

On entend par « échantillon épais» un échantillon dont les dimensions sont telles qu'il est impossible d'avoir une image nette sur toute la profondeur de l'échantillon par un procédé de microscopie optique classique.

De préférence, le couplage des signaux interférométriques obtenus par holographie digitale et des signaux de fluorescence comprend une étape d'enregistrement séquentiel des signaux interférométriques et des signaux de fluorescence de l'échantillon étudié et une étape de reconstruction d'images nettes de la fluorescence dudit échantillon par analyse numérique selon l'une des techniques connues de reconstruction holographique digitale à partir de ces signaux de fluorescence et de ces signaux interférométriques enregistrés.

La présente invention se rapporte également à un dispositif pour la mise en oeuvre du procédé selon la présente invention, caractérisé en ce que qu'il comprend un microscope fonctionnant en holographie digitale classique, combiné à une source d'excitation de la fluorescence.

De préférence, dans ce dispositif, le microscope comprend une source de lumière partiellement cohérente, ou éventuellement cohérente, fonctionnant en transmission.

De préférence, la source d'excitation en fluorescence fonctionne en mode de réflexion ou de transmission.

De manière particulièrement avantageuse, dans le dispositif selon la présente invention, le microscope fonctionnant en holographie digitale comprend:

- une source de lumière partiellement cohérente capable de générer un faisceau lumineux source,
- un premier sous-ensemble, mobile, comprenant un séparateur de faisceau et un miroir, pour former deux faisceaux parallèles, un faisceau objet et un faisceau de référence à partir du faisceau lumineux source,
- un deuxième sous-ensemble, fixe, comprenant également un séparateur de faisceau et un miroir, pour combiner ledit faisceau objet et ledit faisceau de référence en un faisceau lumineux recombiné;
- des moyens de focalisation pour focaliser ledit faisceau lumineux recombiné sur une caméra;
- une cellule objet comprenant un échantillon à étudier, et un objectif de microscope, ladite cellule objet et ledit objectif de microscope étant disposés sur le trajet optique du faisceau objet entre le premier sous-ensemble et le deuxième sous-ensemble;
- un objectif de microscope disposé sur le trajet optique du faisceau de référence entre le premier sous-ensemble et le deuxième sous-ensemble,

caractérisé en ce que ledit microscope holographique comprend en outre des moyens pour collimater le faisceau lumineux source sur le premier sous-ensemble, au niveau du séparateur de faisceau, et une cellule de référence comparable à la cellule objet mais ne contenant pas l'échantillon à observer et disposée sur le trajet optique du faisceau de référence entre le premier et le deuxième sous-ensembles.

De manière avantageuse, ledit microscope comprend en outre des moyens de focalisation additionnels, placés sur le trajet optique du faisceau objet entre le premier sous-ensemble et le deuxième sous-ensemble, pour focaliser le faisceau objet sur la cellule objet contenant l'échantillon à étudier.

De préférence, ces moyens de focalisation additionnels comprennent une lentille de focalisation.

De manière avantageuse également, ledit microscope comprend en outre des moyens de focalisation additionnels, placés sur le trajet optique du faisceau de référence entre le premier sous-ensemble et le deuxième sous-ensemble, pour focaliser le faisceau de référence sur la cellule de référence.

De préférence, ces moyens de focalisation additionnels comprennent une lentille de focalisation.

De préférence, le dispositif selon l'invention comprend en outre des moyens pour enregistrer les images interférométriques et lesdites images de fluorescence.

De préférence, lesdits moyens d'enregistrement correspondent à une caméra CCD couplée à des moyens informatiques de traitement et d'analyse d'images.

Un autre objet de la présente invention concerne un microscope fonctionnant en holographie digitale comprenant:

- une source de lumière partiellement cohérente capable de générer un faisceau lumineux source,
- un premier sous-ensemble, mobile, comprenant un séparateur de faisceau et un miroir, pour former deux faisceaux parallèles, un faisceau objet et un faisceau de référence à partir du faisceau lumineux source,
- un deuxième sous-ensemble, fixe, comprenant également un séparateur de faisceau et un miroir, pour combiner ledit faisceau objet et ledit faisceau de référence en un faisceau lumineux recombiné ;
- des moyens de focalisation pour focaliser ledit faisceau lumineux recombiné sur une caméra;
- une cellule objet comprenant un échantillon à étudier, et un objectif de microscope, ladite cellule objet et ledit objectif de microscope étant disposés sur le trajet optique du faisceau objet entre le premier sous-ensemble et le deuxième sous-ensemble ;
- un objectif de microscope disposé sur le trajet optique du faisceau de référence entre le premier sous-ensemble et le deuxième sous-ensemble,

caractérisé en ce que ledit microscope holographique comprend en outre des moyens pour collimater le faisceau lumineux source sur le premier sous-ensemble, au niveau du séparateur de faisceau, et une cellule de référence comparable à la cellule objet mais ne contenant pas l'échantillon à observer et disposée sur le trajet optique du faisceau de référence entre le premier et le deuxième sous-ensemble.

De manière avantageuse, le microscope selon l'invention comprend en outre, disposés entre le premier sous-ensemble et le deuxième sous-ensemble, des moyens de focalisation additionnels aptes à focaliser le faisceau objet sur la cellule objet, et des moyens de focalisation additionnels aptes à focaliser le faisceau de référence sur la cellule de référence.

## Brève description des figures

La figure 1 représente une source partiellement cohérente spatiale telle qu'utilisée dans une première forme d'exécution de la présente invention et réalisée à partir d'une source incohérente spatiale.

La figure 2 représente une source laser partiellement cohérente spatiale telle qu'utilisée dans une seconde forme d'exécution de la présente invention et réalisée à partir d'une source cohérente spatiale.

La figure 3 représente un microscope fonctionnant en holographie digitale couplé à une source d'excitation de fluorescence, tel qu'utilisé selon présente invention.

Description détaillée de plusieurs formes d'exécution de l'invention

### *Sources lumineuses utilisées pour l'holographie digitale*

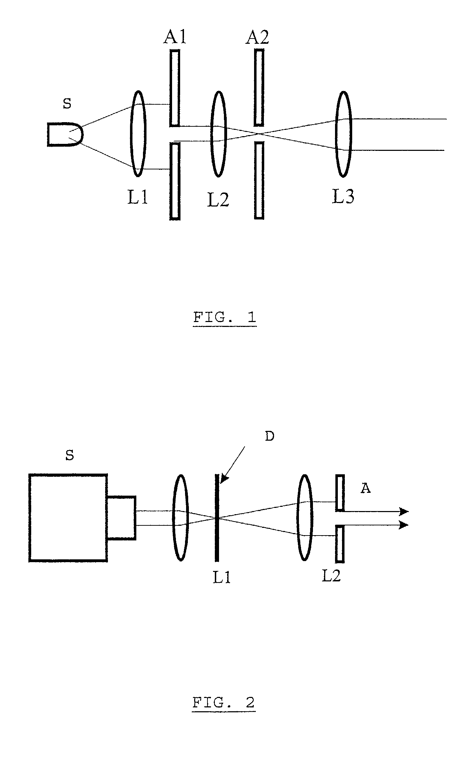

Un premier type de source lumineuse utilisable dans le dispositif selon la présente invention correspond à une source S partiellement cohérente telle que représentée à la figure 1. Une lentille L1 achromatique collimate les faisceaux lumineux émis par une source incohérente spatiale étendue filtrée en longueur d'onde, par exemple une LED (diode émettrice de lumière), vers un premier iris A1 à ouverture réglable. L'ouverture A1 limite le spectre angulaire de la source afin d'augmenter la cohérence spatiale de la lumière. Une seconde lentille L2 achromatique crée une source secondaire en son plan focal où, un second iris A2 limite la taille de la source. Une troisième lentille L3 forme un faisceau collimaté. Les distances focales de L1, L2, L3 sont, par exemple, de 100 mm pour l'holographie digitale.

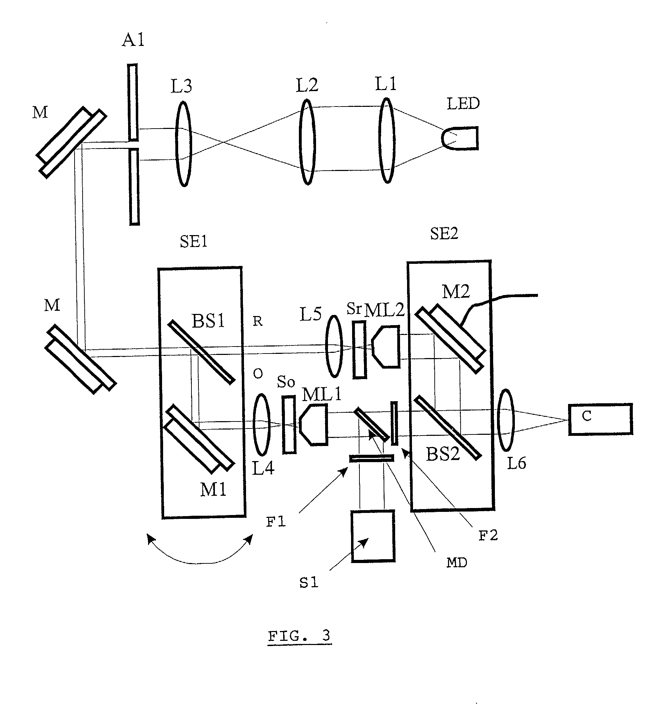

Il est également possible d'utiliser dans le dispositif selon la présente invention une source S laser rendue partiellement incohérente. La figure 2 représente le principe de fonctionnement d'une telle source classiquement utilisée en optique. Un faisceau laser à faisceau parallèle est focalisé par une lentille L1. Un diffuseur tournant D est placé derrière le point focal de manière à former une tache lumineuse dont le diamètre est suffisant pour éclairer le champ de vue du microscope. Le diffuseur crée un champ de « speckle » (granulosité laser) qui varie avec la rotation du diffuseur. Une lentille L2 est placée à sa distance focale par rapport au plan du diffuseur tournant.

Une ouverture A est ensuite placée derrière la lentille de manière à pouvoir élargir la dimension de la taille des grains de « speckle ». En utilisant une rotation du moteur suffisamment rapide par rapport au temps d'exposition du système d'enregistrement d'images, on montre qu'une telle source est équivalente à une source partiellement cohérente spatiale telle que décrite ci-dessus. La largeur de la cohérence spatiale est directement reliée à la dimension des grains de « speckle » qui est ajustée par le diamètre de l'ouverture.

Enfin , on notera qu'il est aussi possible d'utiliser une source laser telle que celles actuellement disponibles sur le marché.

### *Microscope fonctionnant en holographie digitale*

La figure 3 schématise le plan d'un microscope utilisé dans le dispositif selon la présente invention. L'interféromètre du microscope fonctionnant en holographie digitale est du type Mach Zehnder comprend deux sous-ensembles SE1 et SE2. Chacun de ceux-ci comporte un séparateur de faisceau, respectivement BS1 et BS2, et un miroir, respectivement M1 et M2. La source S pour l'holographie digitale est une source partiellement cohérente telle que décrite ci-dessus (avec une diode émettrice de lumière). Ladite source S illumine le séparateur de faisceau BS1. Une partie du faisceau est transmis par BS1 et une partie est réfléchie vers le miroir M1.

Le premier sous-ensemble SE1 permet de former deux faisceaux lumineux parallèles, le faisceau objet O et le faisceau de référence R. Ce premier sous-ensemble SE1 est monté sur une table de rotation, alors que le second sous-ensemble SE2 est fixe. Ceci permet de régler l'égalisation du trajet optique des deux faisceaux de l'interféromètre, le faisceau objet O et le faisceau de référence R.

Au niveau du faisceau objet, une lentille L4 focalise le faisceau lumineux sur l'objet ou l'échantillon contenu dans sa cellule d'observation So. L'objet est observé avec un objectif de microscope ML1 convenant à l'observation en fluorescence (les différents grossissements possibles en microscopie classique sont utilisables). Le couple de lentilles L4-ML1 forme un système afocal. L'objectif ML1 réalise, en combinaison avec la lentille L6, l'image d'un plan passant au travers de l'échantillon.

Parallèlement, au niveau du faisceau de référence R, la lentille L5 focalise le faisceau lumineux sur une cellule d'observation Sr, identique à celle comportant l'échantillon mais sans la présence de ce dernier. Cette disposition permet d'optimiser l'égalisation du trajet optique des deux faisceaux de l'interféromètre.

Un objectif de microscope ML2, identique à ML1, est disposé sur le faisceau de référence. Le couple de lentilles L5-ML2 constitue également un système afocal. Les chemins optiques ML1-L6 et ML2-L6 sont ajustés pour être identiques.

Le second sous-système SE2, qui comporte le miroir M2 et le séparateur de faisceau BS2, permet de combiner le faisceau objet O et le faisceau de référence R. Les faisceaux objet O et de référence R combinés interfèrent au niveau du plan sensible de la caméra vidéo (CCD référencée C sur la figure 3).

Comme indiqué ci-dessous, l'implantation de l'holographie digitale requiert la connaissance de l'amplitude optique mesurée dans un plan de netteté interceptant l'échantillon. L'amplitude optique peut être déterminée à partir des figures d'interférence par deux méthodes :

(i) La méthode de la porteuse ou de la transformée de Fourier. Par cette méthode les faisceaux objets et de référence sont incidents sur la caméra CCD avec un petit angle de manière à obtenir, lorsque aucun échantillon n'est analysé, un réseau de franges d'interférence linéaire. La mesure de changement de phase optique introduit par l'échantillon se traduit alors par une variation de la forme des franges. La détermination de l'amplitude résulte d'une analyse par transformée de Fourier.

(ii) Le miroir (M2) du sous-ensemble SE2 est muni d'un système de déplacement piézoélectrique suivant son axe optique qui permet de changer le chemin optique de référence par des fractions précises de longueur d'onde. Ceci permet d'implanter la technique dite de « phase-stepping » qui consiste à enregistrer plusieurs images déphasées d'une fraction constante de longueur d'onde. Par un traitement informatique, la combinaison de ces interférogrammes permet le calcul de l'amplitude lumineuse émergeante de l'échantillon.

Le microscope peut fonctionner en mode microscopie directe ou inverse selon les besoins.

### Dispositif pour la fluorescence

Sur la figure 3, la source d'excitation S' de la fluorescence est placée en mode de réflexion. Comme indiqué ci-dessus, on peut placer cette source pour fonctionner en mode de transmission.

### Fluorescence en lumière réfléchie

Il s'agit d'un dispositif classique correspondant à celui utilisé en microscopie de fluorescence à lumière réfléchie.

Dans cette configuration qui correspond à celle représentée à la figure 3, la source S' est, soit une lampe à vapeur de mercure, soit une lampe quartz-halogène, soit encore une source qui émet de la lumière dans une gamme de courtes longueurs d'onde nécessaire à la réalisation de la fluorescence. Cette source peut, le cas échéant être un laser. Les rayons lumineux parviennent à un filtre d'excitation F1 sélectionné en fonction du fluorochrome utilisé et sont réfléchis par un miroir dichroïque MD sur l'échantillon au travers de l'objectif.

La lumière fluorescente émise par les fluorochromes contenus dans l'échantillon traverse le miroir dichroïque MD, transparent à ces longueurs d'onde plus longues, traverse un filtre d'arrêt F2 placé pour bloquer les éventuelles courtes longueurs d'onde, et est enregistrée par la caméra CCD.

### Fluorescence en lumière transmise

Pour cette configuration, il y a deux réalisations possibles:

(i) une réalisation à une seule source : la seule source utilisée est celle prévue pour le microscope fonctionnant en holographie digitale mais est simultanément utilisée comme source excitatrice de la fluorescence car elle émet dans une gamme de courtes longueurs d'onde. Ceci permet de réaliser à la fois l'hologramme de l'objet et l'excitation des fluorochromes de l'échantillon.

(ii) une réalisation à deux sources : On combine la source spécifique pour le microscope fonctionnant en holographie digitale à la source émettant la lumière nécessaire à l'excitation des fluorochromes des deux manières suivantes : soit la source nécessaire à la fluorescence est placée juste avant le séparateur de faisceau BS1 soit, cette source est placée juste avant la lentille L4 qui focalise les rayons lumineux sur l'échantillon.

*Couplage des signaux obtenus en holographie digitale et en fluorescence pour la reconstruction 3D des signaux de fluorescence*

Comme décrit ci-dessus, l'instrument comporte deux sous-systèmes optiques couplés qui permettent :

(i) l'enregistrement des images interférométriques en transmission de l'échantillon
(ii) l'enregistrement de l'image fluorescente de l'échantillon activée par la source d'excitation de la fluorescence

Ces images sont formées par le système afocal constitué par le couple de lentilles ML1-L6 qui réalise l'image nette d'un plan perpendiculaire à l'axe optique de l'échantillon sur la face sensible de la caméra CCD. Les images interférométriques et de fluorescence sont enregistrées séquentiellement :

(i) La source de fluorescence est masquée par un obturateur et on enregistre la ou les images interférométriques.
(ii) La source permettant l'enregistrement interférométrique est masquée ou éteinte et on enregistre la ou les images de fluorescence.

Lorsque l'épaisseur de l'échantillon est plus petite que la profondeur de champ du dispositif d'imagerie, l'image de l'échantillon est nette partout. Par contre, et c'est le cas qui concerne le présent développement, lorsque l'épaisseur de l'échantillon excède la profondeur de champ, les parties de l'échantillon au-delà de la zone de profondeur de champ donnent des parties floues dans l'image.

Comme l'échantillon est observé par une caméra vidéo (CCD) grâce au système afocal de lentilles ML1-L6, les signaux interférométriques et de fluorescence sont parfaitement superposés au niveau du capteur et les plans de netteté sont communs pour les deux types d'illumination grâce à l'utilisation de composantes optiques ML1-L6 achromatiques.

### *Rôle de l'enregistrement interférométrique* ou *holographique*

L'enregistrement interférométrique permet la mesure précise de l'amplitude optique complexe dans le plan net de l'échantillon. La source interférométrique cohérente ou partiellement cohérente S est activée et illumine en faisceau collimaté le séparateur de faisceau BS1.

Une partie de ce faisceau, appelé faisceau objet, suit le trajet BS1-M1-L4-So-ML1-BS2-L6-CCD. La phase et l'amplitude de ce faisceau sont modulées par l'échantillon contenu dans la cellule objet So.

L'autre partie du faisceau, appelé faisceau de référence, suit le trajet BS1-L5-Sr-ML2-M2-BS2-L6-CCD. La phase et l'amplitude de ce faisceau sont modulées par la cellule de référence Sr.

Les faisceaux objet et de référence interfèrent sur la face sensible de la caméra vidéo (CCD). La forme de la figure d'interférence est influencée par les changements relatifs de phase optique introduits par les échantillons So et Sr. Comme la cellule de référence Sr est une cellule expérimentale comparable à la cellule objet So mais sans l'échantillon étudié, la forme de la figure d'interférence n'est influencée de manière significative que par les changements de phase optique introduits par l'échantillon étudié.

Le premier objectif est de mesurer l'amplitude optique complexe émergente de l'échantillon à partir de la ou des figure(s) d'interférence mesurée(s) par la caméra CCD. Pour cela, deux méthodes classiques en interférométrie sont disponibles :

(i) La méthode de la transformée de Fourier [1]
(ii) La méthode de décalage de phase.

Connaissant l'amplitude optique complexe dans le plan de netteté de l'échantillon, les méthodes d'holographie digitale permettent de calculer les amplitudes complexes dans des plans parallèles [2-6]. Ces méthodes consistent à calculer par des méthodes numériques le champ optique en utilisant les lois de propagation de l'optique de Fourier (Equation de Kirchhoff - Fresnel). On peut ainsi calculer les amplitudes lumineuses complexes dans des plans qui sont hors de la zone de profondeur de champ initiale du système d'imagerie. Ces méthodes permettent ainsi de rendre nettes des zones d'image qui ont été enregistrées floues.

Une amplitude optique complexe $u(x,y)$ dans un plan (x, y) s'écrit :

$$u(x,y) = \sqrt{I(x,y)}\exp\{i\alpha(x,y)\} \tag{1}$$

où :

$I(x,y)$ est l'intensité lumineuse au point (x,y)

$\alpha(x,y)$ est la phase optique au point (x,y)

$i$ est le nombre imaginaire tel que $i^2 = -1$

La méthode interférométrique revient donc à déterminer, dans le plan dont on réalise l'image, les quantités $I$ $(x,y)$ et $\alpha(x,y)$ de manière à pouvoir calculer, par holographie digitale, l'amplitude optique $u_d'(x',y')$ dans les plans parallèles séparés par des distances $d$. Cette opération s'écrit formellement par :

$$u_d'(x',y') = R[d]u(x,y) \qquad (2)$$

où $R[d]$ est l'opérateur de Kirchhoff-Fresnel.

Plusieurs implantations numériques de cette expression existent dans la littérature [2].

### Enregistrement du signal de fluorescence

La source de l'excitation de la fluorescence étant activée, les substances fluorescentes réparties dans l'échantillon émettent de manière isotrope de la lumière qui donne lieu à un signal détecté par la caméra vidéo (CCD). Si on considère l'émission par un point *(x0,y0)* de l'échantillon situé à une distance $d$ du plan dont on réalise l'image par le couple de lentille ML1-L6, du fait que l'objectif du microscope a une ouverture finie, le point émetteur de fluorescence produit, dans le plan objet dont on réalise l'image, un disque lumineux observable par la caméra vidéo.

Cette répartition de l'intensité lumineuse est notée $I_p$*(x-x0, y-y0)* où l'indice *p* indique que l'on considère le signal de fluorescence.

Le diamètre $D$ du disque lumineux s'exprime, en première approximation, par :

$$D = \frac{d}{fnumber_{ML1}} \qquad (3)$$

où $fnumber_{ML1}$ est le rapport de la distance focale de ML1 par le diamètre de son ouverture.

Il est à noter que l'équation (3) doit être corrigée pour les très petites distances d avec lesquelles il faut considérer les effets de diffraction en illumination incohérente. Toutefois, pour ces distances $d$, l'image du point source se trouve dans la zone de profondeur de champ et ne nécessite donc aucune manipulation ultérieure sur la netteté.

Dans le cas d'échantillons plus complexes comportant plusieurs zones d'émission qui peuvent se trouver à des distances d différentes du plan de netteté, on obtient une répartition d'intensité lumineuse qui s'exprime comme la somme de contributions élémentaires $I_p$ *(x-x0, y-y0).*

### Couplage entre l'amplitude complexe du signal d'holographie digitale et du signal de fluorescence

Le concept qui fait l'objet de la présente demande de brevet est le couplage du signal d'holographie digitale et le signal de fluorescence de manière à pouvoir manipuler le signal de fluorescence et à pouvoir remettre nets, par procédé numérique d'holographie digitale, des signaux de fluorescence qui auraient été enregistrés flous.

Pour que ce couplage puisse se faire, il faut que les régions au sein de l'échantillon biologique qui présentent une fluorescence aient des propriétés optiques (absorbance optique et/ou indice de réfraction) distinctes des régions non fluorescentes qui les entourent. Il faut remarquer que cette condition est satisfaite dans de nombreuses applications en biologie cellulaire, puisque la fluorescence permet le marquage d'organites cellulaires qui sont également visibles par la microscopie optique en contraste de phase. Cette mise en évidence par contraste de phase démontre une variation locale d'indice de réfraction et/ou d'absorbance des organites.

Si on considère une zone limitée de fluorescence au niveau de l'échantillon biologique qui est également une zone de changement local d'indice et/ou d'absorbance par rapport à un fond constant et si on suppose que cette zone se trouve à une distance d du plan de netteté de l'échantillon, la zone de fluorescence, comme décrit précédemment, donne lieu à une tache lumineuse d'intensité $I_p$*(x-x0,y-y0)*. L'amplitude lumineuse mesurée par interferométrie est donnée par l'équation (1) :

$$u(x,y) = \sqrt{I(x,y)}\exp\{i\alpha(x,y)\}$$

Dans un premier temps, on construit une amplitude équivalente de fluorescence par :

$$u_p(x,y) = A\sqrt{I_p(x-x0,y-y0)}\sqrt{I(x,y)}\exp\{i\alpha(x,y)\} \qquad (4)$$

où $A$ est une constante multiplicative qui ne joue pas de rôle déterminant dans la discussion présente.

L'équation (4) pondère l'amplitude interférométrique par l'intensité de fluorescence de manière à amplifier la zone influencée par la fluorescence.

On applique ensuite la reconstruction par holographie digitale pour reconstruire l'image nette de la fluorescence :

$$u_p'(x',y') = R[-d]u_p(x,y) \qquad (5)$$

On calcule ensuite l'intensité lumineuse $u_p'^*(x',y')u_p'(x',y')$ pour obtenir l'image nette d'intensité de la tache de fluorescence.

En pratique, on mesure l'amplitude lumineuse d'interférométrie et la tache de lumière fluorescente sans connaître la distance d. On applique alors la technique de reconstruction par holographie digitale de manière incrémentale pour atteindre l'image la plus nette de la tache de fluorescence.

Si on considère à présent le cas où au sein de l'échantillon l'on a plusieurs zones limitées avec des variations d'indice de réfraction et/ou d'absorbance parmi lesquelles seules certaines de ces zones présentent une émission de fluorescence, deux cas peuvent se présenter :

(i) 1er cas : Les signaux d'interférométrie et de fluorescence sont séparés dans le plan net de l'échantillon. Dans ce cas, on peut directement utiliser la méthode telle que décrite ci-dessus.

(ii) 2ème cas : Les signaux d'interférométrie et de fluorescence se recouvrent au moins partiellement dans le plan net de l'échantillon.

Dans ce cas deuxième cas, l'utilisation de la méthode telle que décrite ci-dessus peut donner lieu à des reconstructions fausses de zones fluorescentes qui en réalité ne le sont pas. En effet, si on considère d'une part les signaux d'interférométrie dus à deux zones de variations d'indice et/ou d'absorbance qui se superposent et d'autre part qu'une seule de ces deux zones présente de la fluorescence, comme la tache de fluorescence recouvre au moins partiellement les signaux interférométriques provenant des deux zones, l'utilisation de la méthode précédente donnera une contribution significative à la fluorescence pour les deux zones. Dans ce cas, de nombreuses méthodes de correction peuvent être implantées de manière à ne reconstruire que la zone pertinente. On citera, à titre d'exemple, une procédure itérative de correction. La distribution de fluorescence initiale dans le plan de netteté sera appelée D0. A la première itération, on utilise la méthode précédente de reconstruction holographique qui donne des contributions en fluorescence pour les deux zones. Le résultat de cette reconstruction sera appelé la configuration C1. On calcule ensuite, en utilisant les lois de propagation de l'optique incohérente, la distribution de lumière de fluorescence, appelée D1, dans le plan de netteté de l'échantillon qui correspond à C1. On compare D1 et D0 de manière à appliquer une correction à C1 et à obtenir une seconde configuration C2. On calcule de là une nouvelle distribution de fluorescence D2 par les lois de l'optique incohérente et on répète ainsi le processus itératif de correction jusqu'à obtenir une différence suffisamment faible entre la distribution de fluorescence DN (Nème itération) calculée par les lois de l'optique incohérente et la distribution de fluorescence DN-1 (itération (N-1)). De nombreuses méthodes d'optimalisation numérique permettent l'implantation d'un tel processus d'optimalisation. A titre d'exemple, on peut citer les méthodes de recuit simulé basées sur la recherche aléatoire de la minimalisation d'une fonction coût qui dans le cas présent pourrait être $(DN-D0)^2$ [ 7].

En résumé, la présente invention consiste à combiner un dispositif de fluorescence avec un microscope fonctionnant en holographie digitale pour la mesure en trois dimensions des zones fluorescentes de micro-échantillons et offre de nombreux avantages par rapport aux techniques actuellement connues.

Un premier avantage est que la présente invention, comparativement à la microscopie classique en fluorescence, permet d'obtenir une image tridimensionnelle de la fluorescence sans que l'on n'ait besoin de déplacer l'échantillon suivant l'axe optique du système.

En outre, dans la présente invention, l'information de phase et d'amplitude fournie par l'holographie digitale permet d'éliminer, en chaque point, la fluorescence parasite par traitement numérique.

Par rapport à la microscopie confocale, la présente invention présente également des avantages particuliers.

Un de ces avantages est qu'elle est beaucoup moins complexe à mettre en oeuvre que la microscopie confocale.

Un autre avantage est qu'elle permet d'utiliser une gamme étendue de sources lumineuses pour générer le signal de fluorescence, et étend donc la gamme de longueurs d'onde disponible pour couvrir les applications. Cela permet en outre d'utiliser des sources moins agressives vis-à-vis des échantillons biologiques.

On notera également que, par rapport à la microscopie confocale, la présente invention permet d'enregistrer les informations sur tout l'échantillon de manière simultanée sur le volume et avec un décalage très faible entre chaque prise (typiquement 1/25 s) pour l'enregistrement de la fluorescence, de telle sorte que la distorsion temporelle introduite par le balayage de la microscopie confocale est éliminée.

En conclusion, la méthode proposée dans la présente invention, qui consiste à coupler des signaux d'interférométrie avec des signaux de fluorescence, permet de localiser en trois dimensions, et de rendre nettes, les régions qui présentent une fluorescence au sein d'un échantillon. Cette méthode est susceptible de trouver des applications intéressantes dans le domaine de l'embryologie où les biologistes souhaitent analyser l'évolution et la dynamique d'embryons vivants qui présentent très rapidement des épaisseurs qui excèdent la profondeur de champ des microscopes optiques. La présente invention peut ainsi permettre, par exemple, une analyse *a posteriori* en trois dimensions du mouvement des cellules marquées par des fluorochromes.

En outre, le microscope holographique tel que défini dans les revendications, présente également un certain nombre d'avantages par rapport aux dispositifs de l'état de la technique, en particulier par rapport au microscope holographique décrit dans « Improved three-dimensional imaging with digital holography microscope using a partial spatial coherent source », F. Dubois *et al., Appl. Opt.* **38,** pp.7085-7094 (1999).

En effet, comparativement au microscope holographique de cette publication, dans le microscope holographique selon la présente invention, la lentille L4 et la lentille L5 qui permettent de focaliser la lumière au niveau, respectivement de la cellule objet et de la cellule de référence, sont situées dans l'interféromètre lui-même, précisément devant l'objectif ML1, respectivement ML2, et non plus en dehors de l'interféromètre. De ce fait, les rayons lumineux qui parviennent au séparateur de faisceau BS1 sont collimatés à l'aide des miroirs M (figure 3) et la position du point de focalisation ne se modifie pas lorsque la position du rayon incident par rapport à l'axe optique varie. Cette caractéristique permet une utilisation nettement plus efficace de la table de rotation et une égalisation plus facile des trajets optiques des faisceaux de référence et objet. Cette possibilité de réglage est essentielle dans un microscope holographique comportant une source de lumière partiellement cohérente.

De plus, dans le microscope holographique selon la présente invention, la présence de la cellule d'observation de référence Sr, comparable à la cellule So qui elle contient l'échantillon, permet encore d'améliorer l'égalisation des trajets optiques objet O et de référence R.

## REFERENCES BIBLIOGRAPHIQUES

1. M. Takeda, H. Ina, S. Kobayashi, "Fourier transform method of fringe pattern analysis for computer based topography and interferometry", J. Opt. Soc. Am. **72**, 156-160 (1972)

2. F. Dubois, L. Joannes, J.-C. Legros, "Improved three-dimensional imaging with digital holography microscope using a partial spatial coherent source " Appl. Opt. **38**, 7085-7094 (1999)

3. E.Cuche, F.Bevilacqua and C. Depeursinge, "Digital holography for quantitative phase contrast imaging", Opt. Let. **24**, 291-293 (1999)

4. T. Zhang and I. Yamaguchi, "Three-dimensional microscopy with phase-shifting digital holography", Opt. Let. **23**, 1221-1223 (1998).

5. Skarman, Wozniac and Becker "Simultaneous 3D-PIV and temperature measurement using a New CCD based holographic interferometer", Flow Meas. Instr. **7**, N°1, pp 1-6 (1996)

6. Y. Takaki and H. Ohzu, "Hybrid holographic microscopy: Vizualization of three-dimensional object information by use of viewing angles", Appl. Opt. **39**, 5302-5308 (2000)

7. S. Kirkpatrick, C.D. Gelatt, Jr., M.P. Vecchi, "Optimization by Simulated Annealing", *Sciences* **220**, 671-679 (1983)

## Revendications

**1.** Procédé pour la mesure et la reconstruction en trois dimensions de la fluorescence issue d'échantillons, en particulier d'échantillons biologiques épais, par le couplage de signaux interférométriques obtenus par holographie digitale et de signaux de fluorescence.

2. Procédé selon la revendication 1, **caractérisé en ce que** le couplage des signaux interférométriques obtenus par holographie digitale et des signaux de fluorescence comprend une étape d'enregistrement séquentiel desdits signaux interférométriques et desdits signaux de fluorescence de l'échantillon étudié et une étape de reconstruction d'images nettes de la fluorescence dudit échantillon par analyse numérique selon l'une des techniques connues de reconstruction holographique digitale à partir de ces dits signaux de fluorescence et de ces dits signaux interférométriques enregistrés.

3. Dispositif pour la mise en oeuvre du procédé selon la revendication 1 ou 2, **caractérisé en ce qu'**il comprend un microscope fonctionnant en holographie digitale classique, combiné à une source d'excitation de la fluorescence.

4. Dispositif selon la revendication 3, **caractérisé en ce que** le microscope comprend une source de lumière partiellement cohérente, ou éventuellement cohérente, fonctionnant en transmission.

5. Dispositif selon la revendication 3 ou 4, **caractérisé en ce que** la source d'excitation en fluorescence fonctionne en mode de réflexion ou de transmission.

6. Dispositif selon l'une des revendications 3 à 5, dans lequel le microscope fonctionnant en holographie digitale comprend:

   - une source (S) de lumière partiellement cohérente capable de générer un faisceau lumineux source,
   - un premier sous-ensemble (SE1), mobile, comprenant un séparateur de faisceau (BS1) et un miroir (M1), pour former deux faisceaux parallèles, un faisceau objet (O) et un faisceau de référence (R) à partir du faisceau lumineux source,
   - un deuxième sous-ensemble (SE2), fixe, comprenant également un séparateur de faisceau (BS2) et un miroir (M2), pour combiner ledit faisceau objet (O) et ledit faisceau de référence (R) en un faisceau lumineux recombiné ;
   - des moyens de focalisation (L6) pour focaliser ledit faisceau lumineux recombiné sur une caméra (C) ;
   - une cellule objet (So) comprenant un échantillon à étudier, et un objectif de microscope (ML1), ladite cellule objet (So) et ledit objectif de microscope (ML1) étant disposés sur le trajet optique du faisceau objet (O) entre le premier sous-ensemble (SE1) et le deuxième sous-ensemble (SE2);
   - un objectif de microscope (ML2) disposé sur le trajet optique du faisceau de référence (R) entre le premier sous-ensemble (SE1) et le deuxième sous-ensemble (SE2),

   **caractérisé en ce que** ledit microscope holographique comprend en outre des moyens (M) pour collimater le faisceau lumineux source sur le premier sous-ensemble (SE1), au niveau du séparateur de faisceau (BS1), et **en ce que** ledit microscope holographique comprend également une cellule de référence (Sr) comparable à la cellule objet (So) mais ne contenant pas l'échantillon à observer et disposée sur le trajet optique du faisceau de référence entre le premier et le deuxième sous-ensemble.

7. Dispositif selon l'une des revendications 3 à 6, **caractérisé en ce qu'**il comprend en outre des moyens pour enregistrer les images interférométriques et lesdites images de fluorescence.

8. Dispositif selon la revendication 7, **caractérisé en ce que** lesdits moyens d'enregistrement correspondent à une caméra CCD couplée à des moyens informatiques de traitement et d'analyse d'images.

9. Microscope fonctionnant en holographie digitale comprenant:

   - une source (S) de lumière partiellement cohérente capable de générer un faisceau lumineux source,
   - un premier sous-ensemble (SE1), mobile, comprenant un séparateur de faisceau et un miroir, pour former deux faisceaux parallèles, un faisceau objet et un faisceau de référence à partir du faisceau lumineux source,
   - un deuxième sous-ensemble (SE2), fixe, comprenant également un séparateur de faisceau et un miroir, pour combiner ledit faisceau objet et ledit faisceau de référence en un faisceau lumineux recombiné ;
   - des moyens (L6) de focalisation pour focaliser ledit faisceau lumineux recombiné sur une caméra;
   - une cellule objet (So) comprenant un échantillon à étudier, et un objectif de microscope (ML1), ladite cellule objet (So) et ledit objectif de microscope (ML1) étant disposés sur le trajet optique du faisceau objet (O) entre le premier sous-ensemble (SE1) et le deuxième sous-ensemble (SE2) ;

- un objectif de microscope (ML2) disposé sur le trajet optique du faisceau de référence (R) entre le premier sous-ensemble (SE1) et le deuxième sous-ensemble (SE2),

**caractérisé en ce que** ledit microscope holographique comprend en outre des moyens (M) pour collimater le faisceau lumineux source sur le premier sous-ensemble (SE1), au niveau du séparateur de faisceau (BS1), et une cellule de référence (Sr) comparable à la cellule objet (So) mais ne contenant pas l'échantillon à observer.

**10.** Microscope selon la revendication 9, **caractérisé en ce qu'**il comprend en outre, disposés entre le premier sous-ensemble (SE1) et le deuxième sous-ensemble (SE2), des moyens de focalisation additionnels (L4) aptes à focaliser le faisceau objet (O) sur la cellule objet (So), et des moyens de focalisation additionnels (L5) aptes à focaliser le faisceau de référence (R) sur la cellule de référence (Sr).

A1 A2

S

L1 L2 L3

FIG. 1

S

D

L1 L2

A

FIG. 2

FIG. 3

**Office européen des brevets**

## RAPPORT DE RECHERCHE EUROPEENNE

Numéro de la demande

EP 01 87 0281

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 038 041 A (SCHILLING BRADLEY ET AL) 14 mars 2000 (2000-03-14) * colonne 1, ligne 12 - colonne 2, ligne 40; figure 1 * --- | 1 | G01N21/64 G02B21/06 |
| A | US 4 827 125 A (GOLDSTEIN SETH R) 2 mai 1989 (1989-05-02) * colonne 7, ligne 1 - colonne 8, ligne 23 * * colonne 8, ligne 66 - colonne 9, ligne 7; figure 1 * ----- | 1 | |

**DOMAINES TECHNIQUES RECHERCHES (Int.Cl.7)**

G01N

Le présent rapport a été établi pour toutes les revendications

| Lieu de la recherche | Date d'achèvement de la recherche | Examinateur |
|---|---|---|
| LA HAYE | 2 mai 2002 | Tabellion, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

Numéro de la demande

EP 01 87 0281

---

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

---

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-8

*Office européen*

des brevets

**ABSENCE D'UNITÉ D'INVENTION**
**FEUILLE SUPPLÉMENTAIRE B**

La division de la recherche estime que la présente demande de brevet européen ne satisfait pas à l'exigence relative à l'unité d'invention et concerne plusieurs inventions ou pluralités d'inventions, à savoir :

1. revendications: 1-8

   Procédé pour la mesure et la reconstruction en trois dimensions de la fluorescence issue d'échantillons

2. revendications: 9-10

   Microscope fonctionnant en holographie digitale

EPO FORM P0402

## ANNEXE AU RAPPORT DE RECHERCHE EUROPEENNE
## RELATIF A LA DEMANDE DE BREVET EUROPEEN NO.

EP 01 87 0281

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-05-2002

| Document brevet cité au rapport de recherche | | Date de publication | Membre(s) de la famille de brevet(s) | | Date de publication |
|---|---|---|---|---|---|
| US 6038041 | A | 14-03-2000 | AUCUN | | |
| US 4827125 | A | 02-05-1989 | AU | 1704788 A | 02-12-1988 |
| | | | EP | 0362228 A1 | 11-04-1990 |
| | | | IL | 86123 A | 06-09-1992 |
| | | | JP | 2503959 T | 15-11-1990 |
| | | | WO | 8808550 A1 | 03-11-1988 |

EPO FORM P0460

Pour tout renseignement concernant cette annexe : voir Journal Officiel de l'Office européen des brevets, No.12/82